# EUROPEAN PATENT SPECIFICATION

(11) **EP 3 322 081 B1**
(45) Date of publication and mention of the grant of the patent: **30.12.2020**
(21) Application number: 17200944.1
(22) Date of filing: 09.11.2017
(51) Int. Cl.: H02M 5/293, H05B 39/04, H02M 7/217, H05B 47/10, H05B 47/175, H02M 1/00

(54) **PRE-REGULATOR FOR A DIMMER**
VORREGLER FÜR EINEN DIMMER
PRÉRÉGULATEUR POUR UN VARIATEUR

(30) Priority: 09.11.2016 BE 201605841
(43) Date of publication of application: 16.05.2018
(73) Proprietor: Niko NV, 9100 Sint-Niklaas (BE)
(72) Inventor: DE BRABANDER, Peter, 9100 Nieuwkerken-Waas (BE)
(74) Representative: DenK iP bv

(56) References cited:
- US-A- 4 562 382
- US-A- 5 736 795
- US-A1- 2008 094 010
- US-B2- 8 547 035

## Description

### Field of the invention

The invention relates to the field of electrical dimmers. More specifically it relates to the field of pre-regulators for controlling the current through a load connected with an electrical dimmer.

### Background of the invention

One of the major challenges in a 2-wire (phase-cut) dimmer configuration is the power for the dimmer itself. In a 2-wire dimmer configuration there is no connection to neutral, whereas in a 3-wire dimmer configuration the (phase-cut) dimmer is connected in series with the load and has in addition a connection to neutral.

In a 2-wire (phase-cut) dimmer configuration the dimmer and the load are connected in series with an AC voltage source. In case the load is a conventional light bulb the power required for operation of the dimmer itself does not induce a current causing the light bulb to glow. However, in case the load is a LED, the LED may start to glow just by the current required to power the dimmer. Therefore the allowed power budget for operation of the dimmer is often very limited (e.g. 150 mW or below). As the available power budget of the dimmer is very limited, the efficiency of the power conversion from AC to DC is very important. Therefore the dimmer must comprise efficient power supplies.

The DC power supply may for example be a switched mode power supply (SMPS) having typically at least one high voltage capacitor. In prior art dimmers, these high voltage capacitors typically cause problems when combined with a LED bulb. The LED bulb may for example flash when the mains is turned on because of a high inrush current. Moreover, some LED bubs cannot be turned off due to too the high (peak) leakage current of the dimmer. Also the minimum dimmer level is dependent on the current consumption of the dimmer itself, which current is also flowing through the lamp connected to the dimmer.

In prior art systems these phenomena may be reduced by adding a fixed value resistor in the current path between an AC voltage source, connected to the dimmer, and the DC power supply. Such a resistor may for example be a positive temperature coefficient (PTC) resistor or a negative temperature coefficient (NTC) resistor.

Alternative systems, such as disclosed in US5736795A1, are comprising self-synchronizing means for stealing operating power during periods in which current to the load is commanded. In these systems a load current switch is maintained in a low impedance state except for the duration of a short power stealing interval each half-cycle of the supplied alternating current. Self-synchronization is achieved with a current detector which senses whether or not the magnitude of the current diverted during each power stealing interval exceeds a current threshold.

US4562382A1 relates to an DC to AC inverter using switching transistors driving a multiple-core transformer.

In US20080094010A1 a dimmer switch is disclosed for controlling the amount of power delivered from a power source to a lighting load. This is achieved by using a controllably conductive device which is controlled by a control circuit that has a three-wire mode of operation and a two-wire mode of operation.

Another system wherein the mode of operation is changed depending on the way the power supply is connected is disclosed in US8547035B2. It relates to a dimmer which is adaptable to either two or three active wires.

In view of these research efforts there is a need for a good dimmer which is adapted to control the current through a connected load.

### Summary of the invention

It is an object of embodiments of the present invention to provide good pre-regulators and dimmers which allow to control the current through a connected load.

The above objective is accomplished by devices according to the present invention.

Embodiments of the present invention relate to a dimmer comprising a switch unit, a DC power supply, and a pre-regulator for controlling the current from an AC voltage source to the DC power supply when the AC voltage source is connected in a series connection with a load between a first terminal and a second terminal of the dimmer. The pre-regulator comprises an adjustable resistor and a sensor, wherein the sensor and the adjustable resistor are connected in series between the switch unit of the dimmer and the DC power supply by means of a switch terminal and a DC terminal. The sensor is adapted for sensing the current between the switch terminal and the DC terminal and the pre-regulator is adapted for controlling the resistance of the adjustable resistor based on the sensed current when the AC voltage source is connected to the dimmer.

The adjustable resistor comprises a first transistor having a first and a second main electrode and a control electrode, wherein the first main electrode of the first transistor is connected to a first terminal of the sensor and wherein the second main electrode of the first transistor is connected directly or indirectly to the switch terminal.

The pre-regulator moreover comprises a second transistor comprising a first and a second main electrode and a control electrode, wherein the first main electrode of the second transistor is connected to the control electrode of the first transistor, the control electrode of the second transistor is connected to the first main electrode of the first transistor, and the second main electrode of the second transistor is connected to a second terminal of the sensor.

The pre-regulator moreover comprises a third transistor having a first and a second main electrode and a control electrode, wherein the first main electrode of the third transistor is connected to the control electrode of the first transistor and wherein the second main electrode of the third transistor is connected to signal ground, and wherein a microcontroller is adapted for controlling the control electrode of the third transistor or wherein the control electrode of the third transistor (408) is adapted for being controlled by a voltage of the switch terminal.

It is an advantage of embodiments of the present invention that the current from the AC voltage source to the DC power supply can be controlled by controlling the resistance of the adjustable resistor. The resistance may, depending on the circumstances, be changed between high-ohmic and low-ohmic. By controlling the current to the DC power supply it can be limited, thereby preventing unwanted activation of the load, e.g. flashing or illumination of light bulb(s) connected to the dimmer. An advantage of the controlled adjustable resistor is that the resistance can be adapted in function of the requirements. Thus, a power efficient dimmer can be obtained compared to a dimmer where the current is limited by adding a passive resistor in the current path between the AC voltage source and the DC power supply. At a maximum conduction angle, the voltage drop over the adjustable resistor is preferably as small as possible. A cycle corresponds with half of the sine, hence the maximum conduction angle has an upper limit of 180°. For a 2-wire dimmer this is not possible because at least 1-2 ms are required for the dimmer to take its power from the mains. In that case the maximum conduction angle may for example be 8 ms. According to standard IEC/TR 63036 Ed.1 document 23B/1201/DTR the maximum conduction angle is 130° (7.22 ms). For prior art dimmers without a pre-regulator but with a fixed value resistor instead, a significant voltage drop over the fixed value resistor will result in a less efficient dimmer which is also prone to heating. This can be solved in accordance with embodiments of the present invention by controlling the resistance of the adjustable resistor in function of the circumstances. By controlling the resistance, also the power drawn by the power supply of the dimmer can be controlled. For example, when the voltage across the high voltage capacitor of the DC power supply is lower than the mains, this could cause the current to the capacitor of the DC power supply to result in a current peak. This current peak can be limited by a pre-regulator in accordance with embodiments of the present invention. The pre-regulator may be adapted for gradually controlling the resistance of the adjustable resistor. This may be advantageous for dimmers comprising such a pre-regulator, for example in case the dimmer is switched off instantaneously. When changing from full drive to instantaneous switch off, a high voltage is induced over the dimmer. This results in a high value of UDIM wherein UDIM is the rectified voltage across the dimmer. The voltage may for example instantaneously change from 100 V to 230 V, which causes a high current through the LED, which can then light up because of this current. In this case, it is an advantage of embodiments of the present invention that the resistance of the pre-regulator can be gradually controlled, thus resulting in a controlled current towards the DC power supply.

In embodiments of the present invention, the pre-regulator comprises a microcontroller adapted for controlling the resistance of the adjustable resistor.

It is an advantage of embodiments of the present invention that the maximum current to the DC power supply can be lowered using a microcontroller. This allows to connect different input signals to the microcontroller which can take these input signals into account for controlling the maximum current. Examples of such input signals are current sensing signals, synchronization signals, (over)temperature signals, user input signals.

In embodiments of the present invention, the microcontroller is adapted for controlling the resistance of the adjustable resistor based on the sensed current.

It is an advantage of embodiments of the present invention that a closed loop control over the microcontroller is possible (e.g. the microcontroller controls the current by adjusting the resistor and by using as feedback signal the measured current). It is an advantage of embodiments of the present invention that the power consumption of the dimmer can be controlled via the pre-regulator while ensuring a smooth dimming of a bulb connected to the dimmer. Depending on the circumstances, the power available to the dimmer is varying. A 2-wire dimmer, for example, needs to draw power via the load. This means that the 2-wire dimmer can draw more power if the load is bigger (in practise a bigger load means more 'leakage current' may flow through the load; the leakage current through the load is thereby defined as the current which does not cause illumination of the load). If more power is available, more power consuming functions may be enabled such as for example a user interface with LED feedback, an increase of RF coverage, etc.

In embodiments of the present invention, the sensor comprises a sense resistor.

In embodiments of the present invention, the adjustable resistor comprises a first transistor having a first and a second main electrode and a control electrode, wherein the first main electrode of the first transistor is connected to a first terminal of the sensor and wherein the second main electrode of the first transistor is connected directly or indirectly to the switch terminal.

In embodiments of the present invention, the pre-regulator comprises a second transistor comprising a first and a second main electrode and a control electrode, wherein the first main electrode of the second transistor is connected to the control electrode of the first transistor, the control electrode of the second transistor is connected to the first main electrode of the first transistor, and the second main electrode of the second transistor is connected to a second terminal of the sensor.

In embodiments of the present invention, the pre-regulator comprises at least one gate resistor, wherein the at least one gate resistor is connected directly or indirectly to the switch terminal at one terminal and to the control electrode of the first transistor at the other terminal.

In embodiments of the present invention, the pre-regulator comprises a third transistor having a first and a second main electrode and a control electrode, and a microcontroller, wherein the first main electrode of the third transistor is connected to the control electrode of the first transistor and wherein the second main electrode of the third transistor is connected to signal ground, and wherein the microcontroller is adapted for controlling the control electrode of the third transistor.

In embodiments of the present invention, the pre-regulator comprises a third transistor having a first and a second main electrode and a control electrode, wherein the first main electrode of the third transistor is connected to the control electrode of the first transistor and wherein the second main electrode of the third transistor is connected to signal ground, and wherein the control electrode of the third transistor is adapted for being controlled by the voltage of the switch terminal.

In embodiments of the present invention, the pre-regulator comprises a memory storage device for storing software code allowing the microcontroller to process incoming data and based thereon to control the control electrode of the third transistor.

It is an advantage of dimmers according to embodiments of the present invention that the current towards the DC power supply can be controlled.

In embodiments of the present invention the DC power supply is a switched mode power supply.

It is an advantage of dimmers according to embodiments of the present invention that an efficient AC-DC power conversion is possible while the current towards the DC power supply can be controlled.

In embodiments of the present invention, the dimmer comprises a microcontroller wherein the microcontroller is adapted for controlling the switch unit and/or the pre-regulator.

It is an advantage of embodiments of the present invention that at least parts of the dimmer can be controlled using a microcontroller. This makes it possible to adjust the maximum allowed current to the DC power supply depending on the load types. It is an advantage of embodiments of the present invention that control of the switch unit and control of the pre-regulator can be done by the same microcontroller.

Particular and preferred aspects of the invention are set out in the accompanying independent and dependent claims.

These and other aspects of the invention will be apparent from and elucidated with reference to the embodiment(s) described hereinafter.

### Brief description of the drawings

FIG. 1 shows a schematic overview of a dimmer and a pre-regulator in accordance with embodiments of the present invention.
FIG. 2 shows a schematic overview of a dimmer and a pre-regulator in accordance with embodiments of the present invention. The pre-regulator is shown in more detail than in FIG. 1.
FIG. 3 shows a detailed electrical scheme of a dimmer in accordance with embodiments of the present invention.
FIG. 4 shows a detailed electrical scheme of a pre-regulator in accordance with embodiments of the present invention.
FIG. 5 shows a detailed electrical scheme of a switch unit of a dimmer in accordance with embodiments of the present invention.
FIG. 6 shows a detailed electrical scheme of a DC power supply of a dimmer in accordance with embodiments of the present invention.
FIG. 7 shows a detailed electrical scheme of a pre-regulator connected with a DC power supply, in accordance with embodiments of the present invention.
FIG. 8 shows a timing diagram of the voltage over the switch terminal and of the current through the pre-regulator of a dimmer in accordance with embodiments of the present invention.
FIG. 9 shows a detailed electrical scheme of a DC power supply of a dimmer in accordance with embodiments of the present invention.

In the different drawings, the same reference signs refer to the same or analogous elements.
Any reference signs in the claims shall not be construed as limiting the scope.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, the present invention relates to a pre-regulator for controlling the current from an AC voltage source to a DC power supply of a dimmer. In a second aspect the present invention relates to a dimmer comprising such a pre-regulator.

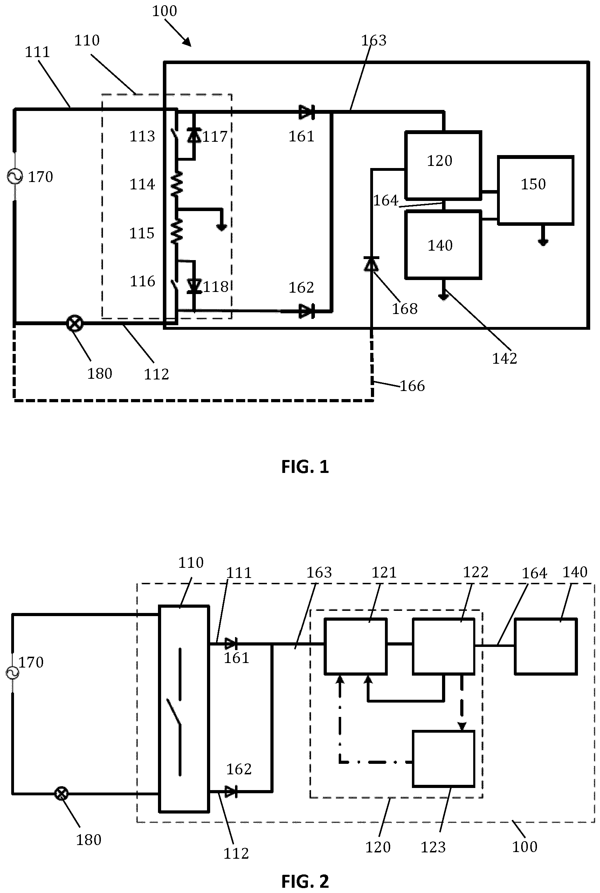

FIG. 1 gives a schematic overview of a dimmer 100 in accordance with embodiments of the present invention. The dimmer 100 comprises a switch unit 110, a pre-regulator 120 in accordance with embodiments of the present invention, a power supply 140, and dimmer electronics 150. A first terminal 111 (the line terminal) of the switch unit 110 is connected to the anode of a first diode 161 and a second terminal 112 (the switched line terminal) of the switch unit 110 is connected to the anode of a second diode 162. The cathodes of both diodes 161, 162 are connected together to a switch terminal 163 of the pre-regulator 120 which is connected with its DC terminal 164 to a first terminal of the power supply 140. The power supply is connected with a second terminal 142 to the signal ground. Both the pre-regulator 120 and the power supply 140 may be controllable using dimmer electronics 150. Dimmer electronics 150 may embed a microcontroller. The microcontroller may be used for several functions such as for instance error handling (e.g. overload), or synchronization handling with the mains. The dimmer electronics may also comprise other components like resistors, op amps, diodes, circuits for conditioning the measured signals. The voltage across first resistor 114 may for example be an input for the microcontroller and has to be dimensioned to make sure the correct trigger is made for an overcurrent. Also the voltage at switch terminal 163 may be measured to provide information to the microcontroller concerning the synchronization. In embodiments of the present invention the dimmer electronics 150 comprises circuitry to insure the basic good working of the dimmer (such as circuits for error (temperature, current, voltage) detection/handling, and synchronization detection). In embodiments of the present invention, the microcontroller may be embedded in the in the dimmer electronics or a separate microcontroller may be used to control the pre-regulator.

In the example illustrated in FIG. 1, the switch unit 110 is formed by a series connection, between the first terminal 111 and the second terminal 112, of a first switch 113, a first sense element, e.g. a first resistor 114, a second sense element, e.g. a second resistor 115, and a second switch 116. A third diode 117 is connected in parallel over the first switch 113, with its anode to the interconnection of the first switch 113 and the first resistor 114 and with its cathode to the first terminal 111. A fourth diode 118 is connected in parallel over the second switch 116, with its anode to the interconnection of the second switch 116 and the second resistor 115 and with its cathode to the second terminal 112. The connection between the first and second sense elements, e.g. the first and second resistors 114, 115 is connected to the signal ground. The third diode 117 may be integrated in the first switch 113. This may for example be the case when using MOSFETs. Also the fourth diode 118 may be integrated in the second switch 116.

The first, second, third and fourth diodes 161, 162, 117, 118 function as a bridge rectifier. The first and second sense elements 114, 115 may be provided for determining an overload or short-circuit situation, but are not essential to the present invention. They may or may not be present in embodiments of the present invention.

The switch unit 110 is connected in series with a load 180, and changes the supply voltage waveform applied to the load from the pure AC waveform applied by the voltage source 170 to a leading edge (forward phase) or a trailing edge (reverse phase) AC voltage waveform, or is capable of switching between both waveforms. The output waveform of the switch unit 110 is applied to one or more loads 180 (only one being illustrated in FIG. 1). The conduction angle of the voltage waveform may be adjustable.

In the example of FIG. 1 a series connection is made between the first terminal 111, the AC voltage source 170, the load 180 and the second terminal 112.

The dimmer illustrated in FIG. 1 is a phase cut dimmer. Such a dimmer either cuts the AC voltage (the mains voltage) immediately after the zero crossing of the mains (leading edge) or towards the next projected zero crossing of the mains (trailing edge). Leading edge and trailing edge functionality may be implemented in one device. Such a dimmer is a universal dimmer.

In the example of FIG. 1, the pre-regulator 120 may be connected with the neutral 166 through diode 168 (in the 3-wire configuration), or it may be not connected with the neutral 166 (in the 2-wire configuration).

In embodiments of the present invention the dimmer is suitable for connecting an AC voltage source and a load in 2-wire mode or in 3-wire mode. In both modes the AC voltage source 170 and the load 180 are connected in series between the first terminal 111 and the second terminal 112 of the dimmer 100. In 3-wire mode, moreover, the interconnection between the AC voltage source 170 and the load 180 is connected with the neutral terminal 166 of the dimmer 100. In 3-wire mode the dimmer's own power will not flow through the load anymore but through a direct path: line terminal - dimmer - neutral terminal.In embodiments of the present invention the AC voltage source 170 (e.g. 90VAC-253VAC) has a line terminal and a neutral terminal.

In 2-wire mode the line terminal of the AC voltage source 170 may for example be connected to the line terminal 111 of the dimmer and the switched line terminal 112 of the dimmer may be connected to the load 180 and from the load a connection may be made to the neutral terminal of the AC voltage source.

In another configuration the line terminal of the AC voltage source may be connected to the load 180, the load 180 may be connected to switched line terminal 112 of the dimmer, and the neutral terminal of the AC voltage source may be connected to the line terminal 111 of the dimmer.

Also in 3-wire mode there may be a similar switch between the line terminal and the neutral terminal of the AC voltage source. In both cases the interconnection between the AC voltage source 170 and the load 180 is connected with the neutral terminal 166 of the dimmer 100. In one configuration the AC voltage source is connected with its line terminal to the line terminal 111 of the dimmer and with its neutral terminal to the load. In another possible configuration the AC voltage source is connected with its neutral terminal to the line terminal 111 of the dimmer and with its line terminal to the load. In these examples the load is connected to the switched line terminal 112 of the dimmer.

In the previous examples the AC-voltage source and the load are connected in series between the line terminal and the switched line terminal of the dimmer with the AC-voltage source connected with the line terminal of the dimmer and the load connected with the switched line terminal of the dimmer. In other exemplary embodiments of the present invention the AC-voltage source and the load are connected in series between the line terminal and the switched line terminal of the dimmer with the AC-voltage source connected with the switched line terminal of the dimmer and the load connected with the line terminal of the dimmer. In 3-wire mode the latter configuration is less preferable because in this configuration the power required for powering the dimmer will result in a current through the load which is not the purpose in a 3-wire configuration.

FIG. 2 shows a schematic overview of a dimmer 100 in accordance with embodiments of the present invention. This example is similar as the example of FIG. 1. It shows a simplified scheme of the switch unit 110 and the pre-regulator 120 is shown in more detail. Also in this example the first terminal 111 of the switch unit 110 is connected to the anode of a first diode 161 and a second terminal 112 of the switch unit 110 is connected to the anode of a second diode 162. The cathodes of both diodes 161, 162 are connected together to the switch terminal 163 of the pre-regulator 120 which is connected with its DC terminal 164 to the power supply 140. The power supply 140 is connected with its second terminal 142 to the signal ground.

In the embodiment illustrated in this figure, the pre-regulator 120 comprises an adjustable resistor 121, a sensor 122 and optionally a microcontroller 123. The adjustable resistor 121 is connected with the switch terminal 163 to the cathode of the first diode 161 and the second diode 162, and with its other terminal to the sensor 122. The sensor 122 on its turn is connected with the DC terminal 164 to the power supply 140. The sensor 122 is adapted for sensing the current flowing from the power supply 140 to the switch terminal 163. Sensing of the current can be done directly or indirectly. Indirect sensing of the current can for example be by measuring the voltage over a resistance. In this embodiment a microcontroller 123 may be connected with the adjustable resistor 121 for controlling the resistance value thereof. For controlling the resistance value of the adjustable resistor 121 the microcontroller 123 may base itself on the current sensed by the sensor 122.

In embodiments of the present invention the adjustable resistor 121 can be controlled solely by direct feedback from the sensor 122 (combination 1). In another embodiment, this control may be complemented with control by a microcontroller 123 (combination 2). In yet another embodiment the feedback from the sensor 122 to the adjustable resistor 121 may be solely done through the microcontroller 123 (combination 3). In yet another embodiment the microcontroller feedback of the sensed current and the direct feedback of the sensed current may be combined (combination 4).

When using combination 2 it is possible to adapt the dimmer for new types of loads (e.g. a new LED bulb with different characteristics). Via direct feedback it may be possible to implement the current limit provided by the guideline "IEC/TR 63036 Ed.1". This guideline specifies the interface for a phase-cut dimmer in phase cut dimmed lighting systems This guideline is not obligated so Led manufacturers may not follow it and may decrease the allowable current flowing through their bulb as this is more cost efficient for them. It is an advantage of embodiments of the present invention that, via the microcontroller, it is possible to adapt the current limit to achieve optimal dimming.

In embodiments of the present invention the microcontroller 123 may use different signals of the dimmer such as current sensing signals, synchronisation signals, and/or (over)temperature signals as inputs based on which it controls the resistance of the adjustable resistance. When the dimmer for example detects that its synchronization fails, the dimmer may provide an error (e.g. blinking red LED). Additionally, in embodiments of the present invention, the dimmer may try to recover the synchronization by increasing the value of the adjustable resistor 121 so that the dimmer gets a higher impedance and thus the synchronization signal may be improved. In embodiments of the present invention the common dimmer signals may be used as input to control the resistance of the pre-regulator.

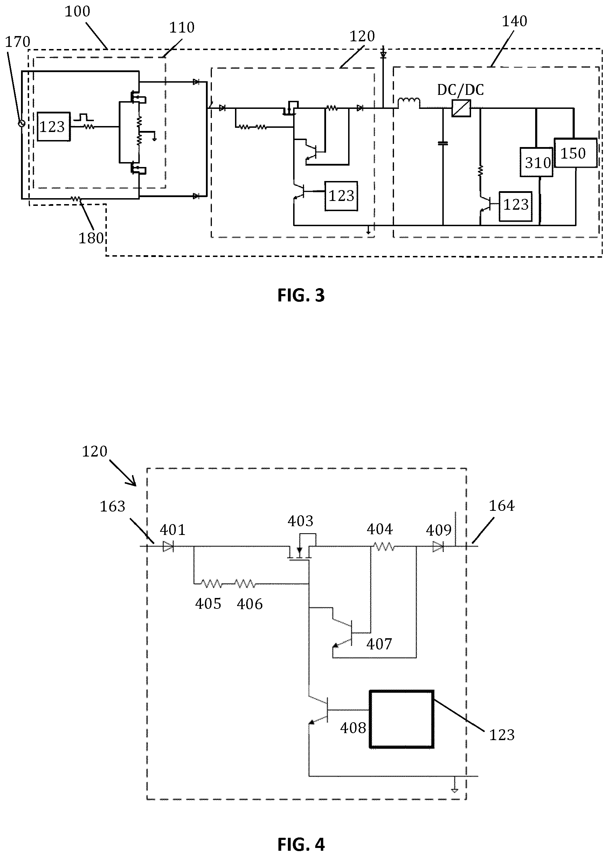

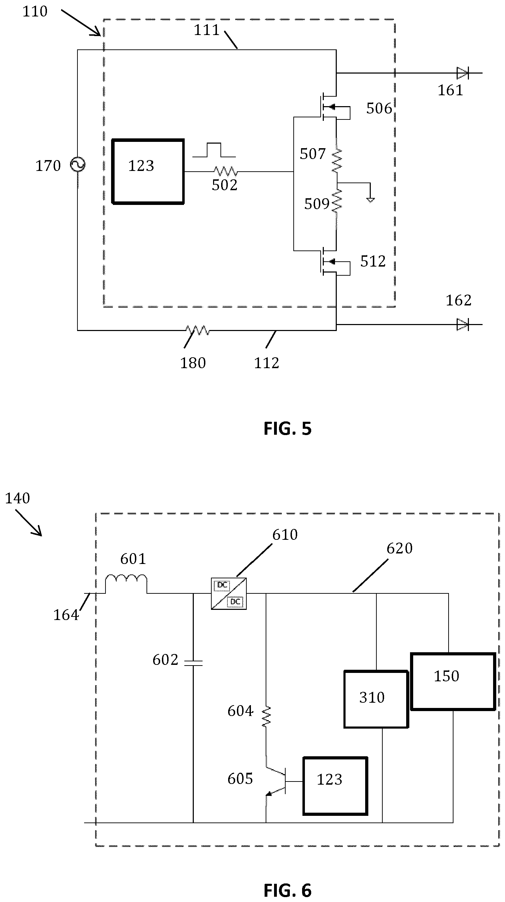

FIG. 3 shows a detailed scheme of a dimmer 100 in accordance with embodiments of the present invention. In this figure the dimmer 100 is connected in series with an AC voltage source 170 and a load 180. The load 180 can for example be a lamp, such as an LED lamp. The dimmer 100 comprises a switch unit 110 connected with a pre-regulator 120 connected with a DC power supply 140. The different subcomponents are explained in the following paragraphs. FIG. 4 shows the same pre-regulator 120, FIG. 5 shows the switch unit 110 and FIG. 6 shows the DC power supply 140.

The pre-regulator 120 illustrated in FIG. 4 has the following configuration. A disconnector element 401 is provided at the entrance of the pre-regulator, coupled to the switch terminal 163. In the embodiment illustrated, this disconnector element is implemented by means of a fifth diode 401. The anode of the fifth diode 401 is connected with the cathode of the first diode 161 (at the switch terminal 163). The cathode of the fifth diode 401 may also be connected with the resistors for the voltage synchronisation circuit. The fifth diode 401 thereby ensures that the voltage synchronization signal is not influenced by the voltage on the high voltage capacitor of the DC power supply. This fifth diode 401 can be a Schottky diode. One electrode of the disconnector element, e.g. the cathode of the fifth diode 401, may be connected, over a sense element (the sense element is however not necessary and is not shown in the figure), with a terminal of a variable resistor. The sense element may for example be a sense resistor. The terminal of the variable resistor may for example be the drain of a first transistor 403. In this example the first transistor 403 is a MOSFET, however, this is not strictly necessary, a transistor in general is sufficient. The transistor may for example be a (high voltage) transistor. In general the variable resistor may be any variable resistor which may be controllable via a voltage or current signal or a protocol like I²C. The variable resistor may be an electronic adjustable potentiometer suitable for the mains voltage range. This voltage range may be between 100 and 360 V or even between 50 and 160V. A gate resistor is provided between the gate of the first transistor 403 and the disconnector element, e.g. fifth diode 401. In the example illustrated in FIG. 4, the gate resistor is implemented as a series connection of a first gate resistor 405 and a second gate resistor 406. Using two resistors in series is advantageous with regard to the max voltage across the resistors. For a standard SMD resistor, e.g. for a 1206 size resistor this is 200V so to withstand mains, 2 of them are required. This could also be achieved using a high voltage or PTH resistor but this is less favourable for the PCB lay-out and has a higher cost. When using a bipolar transistor the first and second gate resistors 405 and 406 are not required. In the exemplary embodiment of FIG. 4 the second gate resistor 406 is connected with the gate of the first transistor 403. The source of the first transistor 403 is connected with a terminal of a sense element, e.g. sense resistor 404, which may be connected with its second terminal to a terminal of a further disconnector element, e.g. the anode of a sixth diode 409. This diode 409 is, however, not strictly required when there is no 2 wire/3 wire detection. The further disconnector element, if implemented as a sixth diode, may be a Schottky diode. The second terminal of the further disconnector element, e.g. the cathode of the sixth diode 409, is electrically connected with the power supply 140 (at the DC terminal 164).

The gate of the first transistor 403 is also electrically connected with a collector of a second transistor 407 and with a collector of a third transistor 408. The base of the second transistor 407 is electrically connected with the source of the first transistor 403. The emitter of the second transistor 407 is connected with a node between the sense element, e.g. sense resistor 404, and the further disconnector element, e.g. the sixth diode. The base of third transistor 408 is, in this example, connected with the microcontroller 123 and the emitter of the third transistor 408 is connected with the signal ground. The second and third transistor 407, 408 may be bipolar transistors. However, this is not strictly required. The second transistor 407 amplifies the signal across sense resistor 404. The third transistor 408 may be used as amplifier or as a switch. The transistor could for example also be used as a relay. This is advantageous when following the "IEC/TR 63036 Ed.1" guideline. According to this guideline, when switching off the power towards the lamp it is required to wait some time to switch on the pre-regulator / power supply again (see fig 5 of this guideline IEC/TR 63036 Ed.1 document 23B/1201/DTR).

In this exemplary embodiment of the present invention the sensor 122 comprises the sense element, e.g. sense resistor 404. The voltage at one or both of the terminals of the sense element, e.g. sense resistor 404, forms the output of the sensor 122. This voltage is used as input for the adjustable resistor 121. The adjustable resistor 121, in the embodiment illustrated in FIG. 4, comprises the first transistor 403. The pre-regulator 120 moreover comprises the second transistor 407, the third transistor 408 and the first and second gate resistors 405, 406. Using these components, the current from the AC voltage source 170 to the DC power supply 140 can be controlled. In this example this is the current to the high voltage capacitor 602 (see FIG. 6). The first transistor 403 functions as a variable resistor wherein the resistance is depending on the voltage on the gate of the first transistor 403. The resistance may for example be changed between high-ohmic and low-ohmic depending on the circumstances. The combination of the sense resistor 404 and the second transistor 407 defines the absolute maximum current which can flow towards the high voltage capacitor 602. Thus the maximum current to the high voltage capacitor 602 is limited via hardware and is dependent on the current through the sense resistor 404. The maximum current to the high voltage capacitor 602 may for example be 18mA, or even 36 mA, or even 46 mA. The signal to the gate of the third transistor 408 can be controlled, for instance by means of a microcontroller 123. When using a bipolar transistor 408 and applying approximately 0.6V on the basis (at higher temperature approximately 0.5 V could be sufficient), the current to the high voltage capacitor 602 is completely switched off as the voltage on the gate is nearly 0V and thus no current can flow through the first transistor (mosfet) 403. In the latter case no power can be taken by the DC power supply 140 (the high voltage capacitor 602 cannot be charged). The microcontroller 123 can thus determine when power can be taken by the DC power supply 140 or not. In embodiments of the present invention the microcontroller 123 can be programmed so as to determine the timing at which power can be taken by the DC power supply 140 (e.g. to synchronise a dimmer and the lamps). The microcontroller can therefore use as input the dimmer's synchronization signals. The microcontroller may not only use these signals to switch power on/off to the load but also to switch on/off the power supply. In embodiments of the present invention the microcontroller is programmed such that the pre-regulator has the same current carrying capability as the dimmer. The microcontroller 123 may be programmed beforehand or may be adjustable by the user. Depending on the load, another maximum current may be preferable. For example, when a high number of lamps (load 180) is connected to the dimmer 100, a higher maximum current may be allowable. This can for example be controlled by the microcontroller 123.

Using this circuitry according to embodiments of the present invention, the current towards the DC power supply 140 can be controlled. The pre-regulator 120 may comprise a memory storage device (not illustrated) having stored software code allowing the microprocessor 123 to process incoming data and based thereon to control the signal to the base of the third transistor 408. Hence, a basic value of the current to the DC power supply can be controlled via hardware by selecting the sense resistor 404. This current can moreover be influenced by the microcontroller 123. It is therefore an advantage of embodiments of the present invention that the current to the DC power supply can be adapted by a microcontroller and thus via software and an algorithm. The fifth diode 401 in the pre-regulator moreover does not influence the sensing circuits of the dimmer itself. The fifth diode 401 in series with the sense resistor 404 prevents unwanted leakage of energy of the capacitor 602. It is an advantage of embodiments of the present invention that the current limiter is not the cause of unwanted leaking energy.

In embodiments of the present invention the values of the inductor 601 and of the capacitor 602 are related to the implementation of the power supply. The value of the sense resistor 404 depends on the maximum allowed current. The value of the sense resistor 404 may for example be calculated using the following formula: 0.6V/max current. Referring to the standard "IEC/TR 63036 Ed.1 document 23B/1201/DTR" the following values are relevant: 16.7 Ohm for 36 mA, 33.3 Ohm for 18mA. The sense resistor 404 may for example be ranging between 12 and 39 Ohm, preferably 15 Ohm. The values of the sense resistors 405/406 depend on the used first transistor (mosfet) 403. Values in the range of 200kOhm to 1MegaOhm may be suitable.

Not all the components in the pre-regulator 120 of FIG. 2/FIG. 4 are required. A first reduced configuration corresponds with an adjustable resistor 121 in series with a sensor 122 wherein the sensor is adapted for controlling the adjustable resistor (combination 1). This configuration is also illustrated in FIG. 2 (when the microcontroller 123 is omitted). For this reduced set the pre-regulator 120 comprises a gate resistor, for instance the first and second gate resistor 405, 406, the first transistor 403, the second transistor 407, and the sense element, e.g. the sense resistor 404. In this configuration the adjustable resistor 121 comprises the first transistor 403 and the sensor 122 comprises the sense element, e.g. sense resistor 404.

This reduced configuration may be complemented with the third transistor 408 controlled by a microcontroller 123. This resulting configuration corresponds with the configuration in FIG. 2 wherein the sensor 122 controls the adjustable resistor 121 and wherein the microcontroller 123 controls the adjustable resistor 121 (combination 2). The latter, however, without input from the sensor 121.

In yet another configuration, corresponding with combination 3 illustrated in FIG. 2, the adjustable resistor 121 is controlled with the microcontroller 123 which has its input from the sensor 122. This input may be the voltage levels at the first end and the second end of the sense element, e.g. sense resistor 404. In this embodiment of the present invention the pre-regulator 120 comprises the sense element, e.g. sense resistor 404, the gate resistor, for instance first and second gate resistor 405, 406, the first transistor 403, the third transistor 408, and the microcontroller 123. The adjustable resistor 121 comprises the first transistor 403 and the sensor 122 comprises the sense element, e.g. sense resistor 404. In embodiments of the present invention the voltages at the first and second terminal of the sense element, e.g. sense resistor 404, are conditioned for the microcontroller 123.

In yet another configuration, the direct feedback from the sensor 122 for controlling the adjustable resistor 121 and the control of the adjustable resistor by the microcontroller 123 (also with input from the sensor) are combined. This configuration corresponds with combination 4 of FIG. 2. In this embodiment the pre-regulator 120 comprises the sense element, e.g. sense resistor 404, the gate resistor, e.g. first and second gate resistors 405, 406, the first transistor 403, the second transistor 407, the third transistor 408, and the microcontroller 123. The microcontroller 123 may use the voltage at the first terminal and second terminal of the sense resistor 404 as inputs.

FIG. 5 shows a detailed electrical scheme of a possible implementation of a switch unit 110 for which the current through the switch terminal 163 can be controlled using a pre-regulator 120 in accordance with embodiments of the present invention. The switch unit 110 comprises a first switch and a second switch. In this example the first switch 113 comprises a first transistor 506 and the second switch 116 comprises a second transistor 512. The signals to the gates of these transistors are controlled by a microcontroller 123 in series with a resistor 502.

The drain of the first transistor is connected with the first terminal 111, and the source of the first transistor 506 is connected to the signal ground over a resistor 507. The same resistor 507 is connected to another resistor 509 which is connected to the source of the second transistor 512.

The drain of the second transistor 512 is connected to the second terminal 112.

The drain of the first transistor 506 is connected to the anode of the first diode 161 and the drain of the second transistor 512 is connected to the anode of the second diode 162. The cathodes of the first and second diode 161, 162 can be connected together at the switch terminal 163.

FIG. 6 shows a detailed electrical scheme of a possible implementation of a DC power supply 140 for which the charging current can be controlled using a pre-regulator 120 in accordance with embodiments of the present invention. In the example of FIG. 6 the DC power supply 140 comprises an inductor 601 connected on one side with the DC terminal 164 of the pre-regulator 120. Between the other side of the inductor 601 and the signal ground a parallel connection is present. The parallel connection comprises a high voltage capacitor 602 on one path and a resistor 604, in series with a switch 605 on the other path. The gate of the switch 605 may be controlled by a microcontroller 123. Resistor 604, and transistor 605 are in this example only important to check whether dimmer is connected in two-wire or in 3-wire mode. This may be done be switching on transistor 605 so resistor 604 is connected as extra load. At the same time the third transistor 408 is switched on meaning the pre-regulator is switched off. If the voltage at 'Vout' (the output voltage 620 of the DC power supply 140) drops and undervoltage detection 310 (Vout compared to pre-defined value) is activated after for example 10 ms this means the dimmer is connected in 2-wire mode, if the voltage Vout does not drop this means the dimmer is connected in 3-wire mode. When the dimmer is connected in 3-wire mode, the transistor 408 may be controlled such that it continuously stays 'ON' meaning the pre-regulator is continuously switched-off.

It is also possible to sense the voltage at DC terminal 164. Measuring Vout is, however, less complex (e.g. Vout is more stabilized).

In parallel therewith the dimmer electronics 150 is connected. This may for example comprise power for the dimmer electronics, which may comprise opamp current sensing circuitry, and a circuit for synchronisation. In order to lower the voltage on the capacitor 320 a DC/DC conversion block 610 is added. This makes it suitable for powering the microcontroller and/or other low voltage components (e.g. op amp).

The voltage at the switch terminal 163 is often used to derive different signals to turn on/off the dimmer switches 113, 116. The disconnector element, e.g. fifth diode 401, (see the example of FIG. 4) is not strictly necessary but it makes sure that the voltage at the switch terminal 163 is not influenced by the voltage across the capacitor of the DC power supply 140 (the high voltage capacitor 602 in the example of FIG. 6). Also the further disconnector, e.g. the sixth diode 409, between the sense element, e.g. sense resistor 404, and the DC terminal 164 makes sure that the voltage at the switch terminal 163 is not influenced by the voltage across the high voltage capacitor 602 of the power supply 140. For this protection one or both of the disconnector elements, e.g. diodes 401, 409, may be present.

In embodiments of the present invention, the first and second gate resistors 405, 406 may be combined into one single resistor instead of two. Due to the high voltage across these resistors it may be cheaper to use two resistors instead of a single resistor.

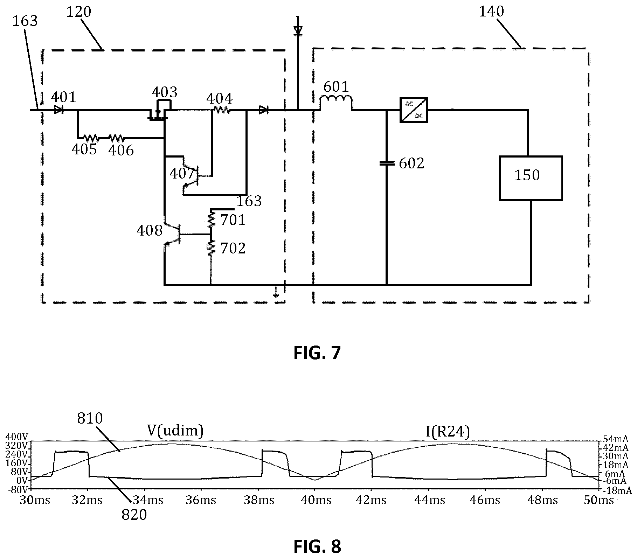

FIG. 7 is an electronic design scheme of a pre-regulator 120 in accordance with embodiments of the present invention. This pre-regulator 120 is similar as the pre-regulator in FIG. 4 but the gate of the third transistor 403 is in this pre-regulator 120 not controlled by the microcontroller 123 but by a voltage derived from the voltage at the switch terminal 163. In this case, the switch terminal 163 is connected to signal ground over a series connection of a first resistor 701 and a second resistor 702. The gate of the third transistor 408 is coupled to the node between the first resistor 701 and the second resistor 702. In this case, the time the dimmer can power itself is defined via hardware (and hence is not adjustable during normal operation).

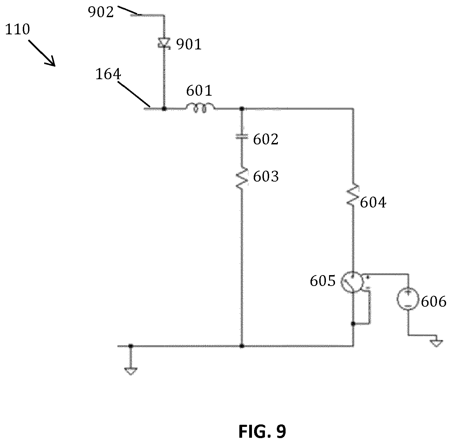

FIG. 8 shows in a timing diagram the voltage at the switch terminal 163 and the current through the sense resistor 404 for a pre-regulator 120 according to the electronic design scheme of FIG. 7. As can be seen from the diagram, each start and end of the voltage at the switch terminal 163 the dimmer can draw current. If the load is switched ON via the leading edge, only during the start the dimmer can draw current. If the load is switched ON via the trailing edge only during the end the dimmer can draw current. In embodiments of the present invention a microprocessor is used to pre-define, via the first resistor 701 and the second resistor 702, a window in which the power supply can take power from the mains. In embodiments of the present invention this window is fixed.
A dimmer according to embodiments of the present invention may also be connected in 3-wire mode. In 3-wire mode the neutral of the dimmer is connected to the neutral wire of the AC voltage source. An example thereof is illustrated in FIG. 9. This shows a similar DC power supply as in FIG. 6. It additionally has a seventh diode 901 which is connected with its cathode to the DC terminal 164 and with its anode to the neutral wire 902 of the AC voltage source. The advantage thereof is that the high voltage capacitor 602 is charged through the seventh diode 902, thus avoiding large currents being drawn through the load 180. In this example the switch 605 and the can be controlled by element 606.

## Claims

1. A dimmer (100) comprising a switch unit (110), a DC power supply (140), and a pre-regulator (120) for controlling a current from an AC voltage source (170) to the DC power supply (140) when the AC voltage source (170) is connected in a series connection with a load between a first terminal (111) and a second terminal (112) of the dimmer (100), the pre-regulator (120) comprising an adjustable resistor (121) and a sensor(122),
wherein the sensor (122) and the adjustable resistor (121) are connected in series between the switch unit (110) and the DC power supply (140), wherein the switch unit (110) is connected with a switch terminal (163) of the pre-regulator (120) and wherein the DC power supply (140) is connected with a DC terminal (164) of the pre-regulator (120), wherein the sensor (122) is adapted for sensing a current between the switch terminal (163) and the DC terminal (164) and wherein the pre-regulator (120) is adapted for controlling the resistance of the adjustable resistor (121) based on the sensed current when the AC voltage source is connected to the dimmer, wherein the adjustable resistor (121) comprises a first transistor (403) having a first and a second main electrode and a control electrode, wherein the first main electrode of the first transistor (403) is connected to a first terminal of the sensor (122) and wherein the second main electrode of the first transistor (403) is connected directly or indirectly to the switch terminal (163),
wherein the pre-regulator (120) moreover comprises a second transistor (407) comprising a first and a second main electrode and a control electrode, wherein the first main electrode of the second transistor (407) is connected to the control electrode of the first transistor (403), the control electrode of the second transistor (407) is connected to the first main electrode of the first transistor (403), and the second main electrode of the second transistor (407) is connected to a second terminal of the sensor(122),
**characterized in that** the pre-regulator moreover comprises a third transistor (408) having a first and a second main electrode and a control electrode, wherein the first main electrode of the third transistor (408) is connected to the control electrode of the first transistor (403) and wherein the second main electrode of the third transistor (408) is connected to signal ground, and wherein: i) either the pre-regulator further comprises a microcontroller (123) adapted for controlling the control electrode of the third transistor (408), or ii) wherein the control electrode of the third transistor (408) is adapted for being controlled by a voltage of the switch terminal (163).

2. A dimmer (100) according to claim 1, wherein the sensor (122) comprises a sense resistor (404).

3. A dimmer (100) according to any of the previous claims, wherein the pre-regulator (120) furthermore comprises at least one gate resistor (405, 406), wherein the at least one gate resistor (405, 406) is connected directly or indirectly to the switch terminal (163) at one terminal and to the control electrode of the first transistor (403) at the other terminal.

4. A dimmer (100) according to any of the previous claims, wherein the DC power supply (140) is a switched mode power supply.

5. A dimmer according to claim 1, as long as it comprises the microcontroller, wherein the microcontroller moreover is adapted for controlling the switch unit (110).

## Patentansprüche

1. Dimmer (100) umfassend eine Schalteinheit (110), eine Gleichstromversorgung (140) und einen Vorregler (120) zum Steuern eines Stroms von einer Wechselspannungsquelle (170) zu der Gleichstromversorgung (140), wenn die Wechselspannungsquelle (170) mit einer Last zwischen einem ersten Anschluss (111) und einem zweiten Anschluss (112) des Dimmers (100) in Reihe geschaltet ist, wobei der Vorregler (120) einen einstellbaren Widerstand (121) und einen Sensor (122) umfasst,
wobei der Sensor (122) und der einstellbare Widerstand (121) zwischen der Schalteinheit (110) und der Gleichstromversorgung (140) in Reihe geschaltet sind, wobei die Schalteinheit (110) mit einem Schaltanschluss (163) des Vorreglers (120) verbunden ist und wobei die Gleichstromversorgung (140) mit einem Gleichstromanschluss (164) des Vorreglers (120) verbunden ist, wobei der Sensor (122) geeignet ist, einen Strom zwischen dem Schaltanschluss (163) und dem Gleichstromanschluss (164) zu erfassen, und wobei der Vorregler (120) dazu ausgelegt ist, den Widerstand des einstellbaren Widerstands (121) auf der Grundlage des erfassten Stroms zu steuern, wenn die Wechselspannungsquelle mit dem Dimmer verbunden ist, wobei der einstellbare Widerstand (121) einen ersten Transistor (403) mit einer ersten und einer zweiten Hauptelektrode und einer Steuerelektrode umfasst, wobei die erste Hauptelektrode des ersten Transistors (403) mit einem ersten Anschluss des Sensors (122) verbunden ist und wobei die zweite Hauptelektrode des ersten Transistors (403) direkt oder indirekt mit dem Schaltanschluss (163) verbunden ist,
wobei der Vorregler (120) außerdem einen zweiten Transistor (407) umfasst, der eine erste und eine zweite Hauptelektrode und eine Steuerelektrode umfasst, wobei die erste Hauptelektrode des zweiten Transistors (407) mit der Steuerelektrode des ersten Transistors (403) verbunden ist, wobei die Steuerelektrode des zweiten Transistors (407) mit der ersten Hauptelektrode des ersten Transistors (403) verbunden ist, und wobei die zweite Hauptelektrode des zweiten Transistors (407) mit einem zweiten Anschluss des Sensors (122) verbunden ist,
**dadurch gekennzeichnet, dass** der Vorregler darüber hinaus einen dritten Transistor (408) mit einer ersten und einer zweiten Hauptelektrode und einer Steuerelektrode umfasst, wobei die erste Hauptelektrode des dritten Transistors (408) mit der Steuerelektrode des ersten Transistors (403) verbunden ist und wobei die zweite Hauptelektrode des dritten Transistors (408) mit der Signalmasse verbunden ist, und wobei:
i) entweder der Vorregler ferner einen Mikrocontroller (123) umfasst, der zur Steuerung der Steuerelektrode des dritten Transistors (408) geeignet ist, oder ii) die Steuerelektrode des dritten Transistors (408) geeignet ist, durch eine Spannung des Schaltanschlusses (163) gesteuert zu werden.

2. Dimmer (100) nach Anspruch 1, wobei der Sensor (122) einen Sensorwiderstand (404) umfasst.

3. Dimmer (100) nach einem der vorhergehenden Ansprüche, wobei der Vorregler (120) ferner mindestens einen Gate-Widerstand (405, 406) umfasst, wobei der mindestens eine Gate-Widerstand (405, 406) an einem Anschluss direkt oder indirekt mit dem Schaltanschluss (163) und am anderen Anschluss mit der Steuerelektrode des ersten Transistors (403) verbunden ist.

4. Dimmer (100) nach einem der vorhergehenden Ansprüche, wobei die Gleichstromversorgung (140) ein Schaltnetzteil ist.

5. Dimmer nach Anspruch 1, sofern er den Mikrocontroller umfasst, wobei der Mikrocontroller darüber hinaus zum Steuern der Schalteinheit (110) geeignet ist.

## Revendications

1. Variateur (100) comprenant une unité de commutation (110), une alimentation en courant continu (140) et un prérégulateur (120) pour la commande d'un courant d'une source de tension alternative (170) à l'alimentation en courant continu (140) lorsque la source de tension alternative (170) est connectée en série à une charge entre une première borne (111) et une deuxième borne (112) du variateur (100), le prérégulateur (120) comprenant une résistance réglable (121) et un capteur (122),
le capteur (122) et la résistance réglable (121) étant connectés en série entre l'unité de commutation (110) et l'alimentation en courant continu (140), l'unité de commutation (110) étant connectée à une borne de commutation (163) du prérégulateur (120), et l'alimentation en courant continu (140) étant connectée à une borne de courant continu (164) du prérégulateur (120), le capteur (122) étant adapté pour détecter un courant entre la borne de commutation (163) et la borne de courant continu (164), et le prérégulateur (120) étant adapté pour commander la résistance de la résistance réglable (121) sur la base du courant détecté lorsque la source de tension alternative est connectée au variateur, la résistance réglable (121) comprenant un premier transistor (403) comportant une première et une deuxième électrode principale et une électrode de commande, la première électrode principale du premier transistor (403) est connectée à une première borne du capteur (122), et la deuxième électrode principale du premier transistor (403) étant connectée directement ou indirectement à la borne de commutation (163),
le prérégulateur (120) comprenant en outre un deuxième transistor (407) comprenant une première et une deuxième électrode principale et une électrode de commande, la première électrode principale du deuxième transistor (407) étant connectée à l'électrode de commande du premier transistor (403), l'électrode de commande du deuxième transistor (407) est connectée à la première électrode principale du premier transistor (403), et la deuxième électrode principale du deuxième transistor (407) est connectée à une deuxième borne du capteur (122),
**caractérisé en ce que** le prérégulateur comprend en outre un troisième transistor (408) comportant une première et une deuxième électrode principale et une électrode de commande, la première électrode principale du troisième transistor (408) étant connectée à l'électrode de commande du premier transistor (403), et la deuxième électrode principale du troisième transistor (408) étant connectée à la masse de signal, et dans lequel :
i) soit le prérégulateur comprend en outre un microcontrôleur (123) adapté pour commander l'électrode de commande du troisième transistor (408), soit
ii) dans lequel l'électrode de commande du troisième transistor (408) est adaptée pour être commandée par une tension de la borne de commutation (163).

2. Variateur (100) selon la revendication 1, dans lequel le capteur (122) comprend une résistance de détection (404).

3. Variateur (100) selon l'une quelconque des revendications précédentes, dans lequel le prérégulateur (120) comprend en outre au moins une résistance de grille (405, 406), dans lequel l'au moins une résistance de grille (405, 406) est connectée directement ou indirectement à la borne de commutation (163) au niveau d'une borne et à l'électrode de commande du premier transistor (403) au niveau de l'autre borne.

4. Variateur (100) selon l'une quelconque des revendications précédentes, dans lequel l'alimentation en courant continu (140) est une alimentation en mode commuté.

5. Variateur selon la revendication 1, tant qu'il comprend le microcontrôleur, dans lequel le microcontrôleur est en outre adapté pour commander l'unité de commutation (110).
